# EUROPEAN PATENT APPLICATION

(11) **EP 0 767 102 A1**
(43) Date of publication of application: **09.04.1997**
(21) Application number: 96830210.9
(22) Date of filing: 15.04.1996
(51) Int. Cl.: B65B 61/18

(54) **System for providing letter envelopes with means for tear-open opening**

(30) Priority: 06.10.1995 IT BS950085
(71) Applicant: Bertoli, Egidio, 25062 Concesio (Brescia) (IT); Trivella, Maria, 25062 Concesio (Brescia) (IT); Manfredini, Luigi, 25123 Brescia (IT)
(72) Inventor: Bertoli, Egidio, 25062 Concesio (Brescia) (IT); Trivella, Maria, 25062 Concesio (Brescia) (IT); Manfredini, Luigi, 25123 Brescia (IT)
(74) Representative: Manzoni, Alessandro

(57) **Abstract**

A system for the production of tear-open envelopes of the type with a closing flap and provided with a reinforcing thread or tape applied to the inside face of the envelope, parallel to the flap folding line. It comprises collection of each envelope from a loader and sending it flat onto a conveyor, application of reinforcing tape to the inside face of each envelope after opening the flap, if closed, cutting of the reinforcing tape in the required length and marking a tearing trace astride of the folding line and of the tearing tape.

## Description

The present invention pertains to the field of letter envelopes, specially tear-open envelopes which do not require any tools or objects for tearing paper. More particularly, the invention concerns a system for providing such envelopes with means for tear-open opening.

In the field of letter envelopes, tear-open envelopes are also known which are provided with a thread or tape applied to the inside face of the envelope, adjacent to the folding line of the closing flap, and with a weaker pre-cut area in the middle part of the envelope, astride of the flap folding line and of the reinforcing tape, so as to make for easier opening of the envelope.

Up to now, the main problem arisen in the production of said envelopes, which has contributed to limit the diffusion of this type of material, was the difficulty of mechanically applying the reinforcing tape to pre-formed envelopes with outputs of industrial rate, so as to limit the cost of finished envelopes.

It is an object of the present invention to obviate said problem in a relatively simple and efficient manner, in order to provide tear-open envelopes which are really practical and convenient and at competitive costs.

A further object of the invention is to propose a system for producing tear-open envelopes which is practicable starting from pre-formed envelopes with closed flap -not stuck up of course- or with open flap as well.

For this purpose, the system proposed herein for the production of tear-open envelopes comprises:
- arrangement of pre-formed starting envelopes onto a loader/feeder;
- collection of each envelope from said loader and sending thereof onto a conveyor, which conveys envelopes flat, in the direction of their length;
- opening, if closed, of the flap of each envelope while it is advancing on said conveyor;
- application of reinforcing tape to the inside face of each envelope, adjacent and parallel to the flap folding line;
- cutting of the reinforcing tape in the required length;
- closing of the flap, if required;
- marking of a tearing trace astride of the flap folding line and of the reinforcing tape;
- discharge of the finished envelope;

In starting-envelope packs, some envelopes are often crushed up or stuck together, or different to one another in dimensions: such conditions result in rejection problems at automatic envelope-filling machines and above all during typographic printing.

The system proposed herein, besides proposing a rational and efficient production of tear-open envelopes, has the advantage to carry out a selection of the envelopes as well, to detach them if stuck together and therefore to better prepare them for printing operations and for automatic envelope-filling machines.

Further details of the invention will however become apparent from the continuation of the description made with reference to the attached drawings, in which:
- Fig. 1 shows a schematic side view of a machine for putting into practice the system according to the invention;
- Fig. 2 shows a cross-sectional view of the machine according to arrows II-II in Fig. 1, i.e. at the opening station of the flap of each envelope;
Fig. 3 shows a view from above of the part of the machine as shown in Fig. 2; and
Fig. 4 shows an open envelope, provided with means for tear-open opening when it will be sealed.

The system proposed herein aims at providing each letter envelope 10, of the type with folding closing flap 11, around a folding line 12, with means for tear-open opening after the envelope has been sealed.

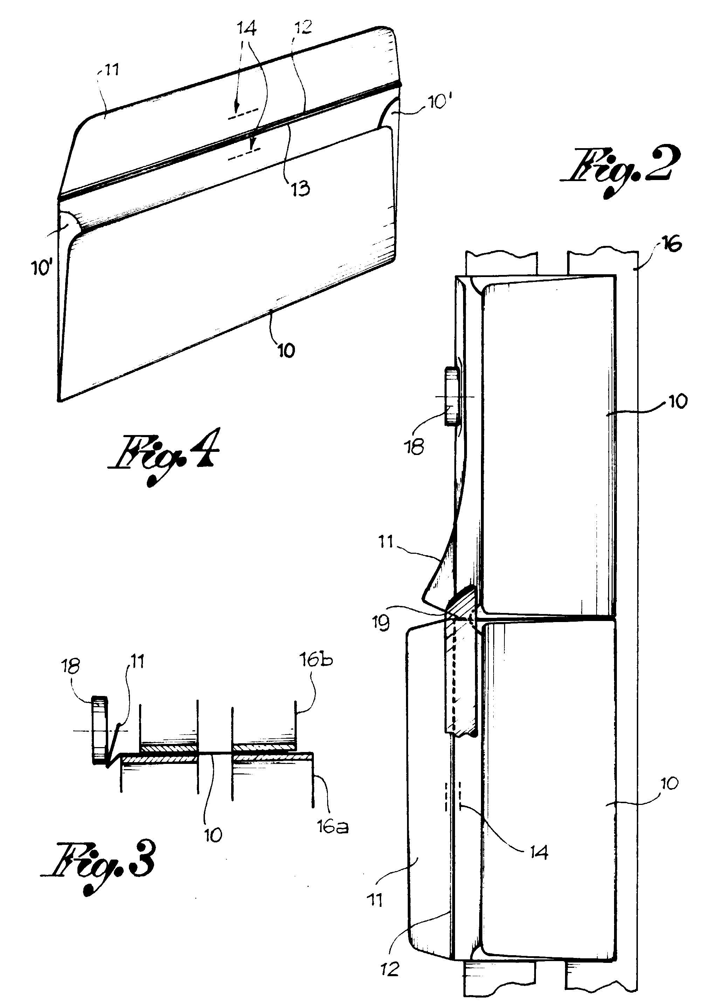

Such means comprise a reinforcing tape 13 applied to the inside face of the envelope, close and parallel to the folding line 12 of the flap, and a tearing trace 14, continuous or in section line, provided in the intermediate area of the envelope, astride of the folding line 12 and of the reinforcing tape 13, as shown in Fig. 4. It is important to point out that, for a more correct application of the reinforcing tape 13, the side tongues 10' of the envelope are punched and kept lower so as to be away from the flap folding line.

It must also be noticed that envelopes with lower side tongues are not available and have never been offered on the market, and that such lower tongues are fundamental to permit correct application of the tearing element.

Starting envelopes 10 are manually or automatically arranged onto a loader/feeder 15, preferably vibrating. Envelopes may have closed or open flap: the case illustrated herein considers envelopes with closed flap. They are supported by the loader ranged close to one another or piled face to face.

Starting envelopes thus arranged are then collected from the loader 15 and sent onto a conveyor 16 one after the other, loaded flat and advancing in the direction of their length, preferably with no remarkable intervals.

Each envelope for example may be collected from the loader 15 pneumatically, by means of a rotating drum 17 having at least one side opening connected to a suction source. It is however understood that collection of each envelope for sending thereof onto conveyor 16 may also be carried out with other pneumatic or mechanical means.

The conveyor 16 is preferably of endless type and comprises two units 16a and 16b superimposed and designed to receive, convey and keep envelopes outstretched between them.

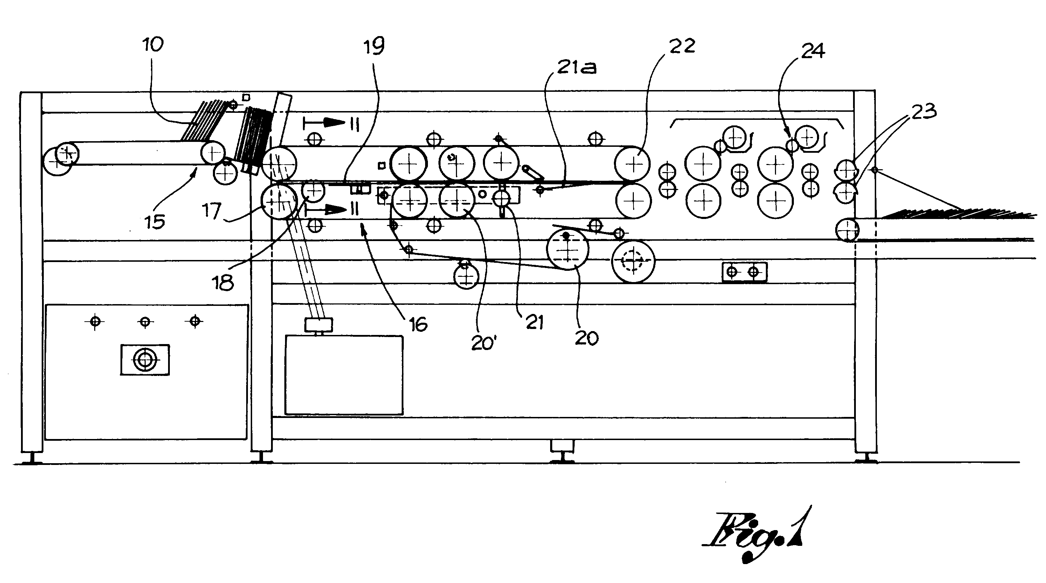

Along the conveyor 16, after the collection means 17, a device is provided for opening envelope flaps (when they are closed). Said device comprises, for example, a rotating disc 18 at right angles to the advance plane of the envelope, on one side of the plane, and designed to press the envelope for partial opening or lifting of the flap, and a deflector 19 which overturns and opens the flap completely as shown in Figs. 2 and 3.

After opening the flap, if such opening is required, the envelope is conveyed to a station 20' for application of reinforcing tape 13. Such tape unrolls and comes in a continuous manner from a spool 20 and may be of selfsticking type or designed to be applied by gluing. Immediately after application, the reinforcing tape is cut at the edge of the envelope, i.e. between two consecutive envelopes, by a rotating cutting device or alternative 21, working by hot cutting, mechanical cutting, laser cutting or otherwise. Then, if required, the flap will be closed on the envelope by a deflector 21a working opposite to the aforementioned deflector 19 used to open the envelope. The process is then completed by marking the tearing trace 14 by means of an incision 22 and by discharging each finished envelope from the conveyor. Such discharge may be carried out with rotating cam elements 23 which permit to establish an expulsion rhythm according to the length of the envelope.

Finished envelopes arrive on a collection channel and are sent to packing boxes or directly to flexographic or offset printing units 24, which may be built-in or located in succession to the described system.

## Claims

1. A system for the production of tear-open envelopes of pre-formed type with closing flaps, provided with a reinforcing thread or tape applied to the inside face of the envelope adjacent and parallel to the folding line of the closing flap and with a pre-cut tearing trace in the middle part of the envelope, astride of the flap folding line and of the reinforcing tape, **characterised in that** it comprises:
- arrangement of pre-formed starting envelopes onto a loader/feeder;
- collection of each envelope from said loader and sending thereof onto a conveyor, which conveys envelopes flat, in the direction of their length;
- opening, if closed, of the flap of each envelope while it is advancing on said conveyor;
- application of reinforcing tape to the inside face of each envelope, adjacent and parallel to the flap folding line;
- cutting of the reinforcing tape in the required length;
- closing of the flap, if required;
- marking of a tearing trace astride of the flap folding line and of the reinforcing tape;
- discharge of the finished envelope, after possible typographic printing.

2. A system according to claim 1, wherein starting envelopes on the loader may have closed or open flap as well.

3. A system according to claim 1, wherein each envelope is taken from the loader and sent to the conveyor pneumatically or mechanically.

4. A system according to claim 1, wherein the reinforcing tape comes from a spool in a continuous manner, it may be selfsticking or non-selfsticking type and is cut in the required length between an envelope and the following one, by hot cutting, laser cutting or mechanically.

5. A system according to claim 1, wherein the tearing trace is an incision, continuous or in section line.

6. A machine for the production of tear-open envelopes according to the system as claimed in claim 1, **characterised in that** it comprises a loader-feeder (15) for starting envelopes, a conveyor (16) designed to receive and convey the envelopes, a means for collecting each envelope from said loader and sending it onto said conveyor, means located along said conveyor to open the envelope flap, if it is closed, means for applying the reinforcing tape to the inside face of the envelope and for cutting said tape at the edge of each envelope, means for closing the envelope flap, if required, means for incising the envelope so as to mark a tearing trace and means for sending each finished envelope away from said conveyor, after possible typographic printing.

7. A system and a machine for the production of tear-open envelopes, wherein each envelope is pre-formed with a closing flap (11) which may be folded along a folding line (12) extending between two side tongues (10') of the envelope and which is provided with a tearing thread or tape (13) parallel to the flap itself, wherein the side tongues of the envelope are punched and lower so as to be away from the flap folding line, in order to prevent the thread or tape from overlapping the tongues.
